# EUROPEAN PATENT SPECIFICATION

(11) **EP 3 425 309 B1**
(45) Date of publication and mention of the grant of the patent: **22.01.2020**
(21) Application number: 18180304.0
(22) Date of filing: 28.06.2018
(51) Int. Cl.: F25B 43/00, F25B 13/00, F25B 27/02, F25B 41/04

(54) **AIR CONDITIONING APPARATUS**
KLIMATISIERUNGSVORRICHTUNG
APPAREIL DE CLIMATISATION

(30) Priority: 05.07.2017 JP 2017131910
(43) Date of publication of application: 09.01.2019
(73) Proprietor: Panasonic Intellectual Property Management Co., Ltd., Osaka-shi, Osaka 540-6207 (JP)
(72) Inventor: MASUDA, Tetsuya, Osaka, 540-6207 (JP); HASEGAWA, Hiroshi, Osaka, 540-6207 (JP); SUITO, Kazuaki, Osaka, 540-6207 (JP)
(74) Representative: Eisenführ Speiser

(56) References cited:
- EP-A1- 2 908 061
- WO-A1-2015/122168
- JP-A- 2003 056 932

## Description

### BACKGROUND OF THE INVENTION

### Field of the Invention

The present invention relates to an air conditioning apparatus including a compressor that is driven by a gas engine.

### Description of the Related Art

There is proposed an air conditioning apparatus including a plurality of compressors having different capacities in an outdoor unit, and including a plurality of driving means that are provided correspondingly to the respective compressors, and control means that individually drives the plurality of compressors or drives the plurality of compressors in combination in accordance with a magnitude of a required load. (Japanese Patent Laid-Open no. 2003-56932, for example).

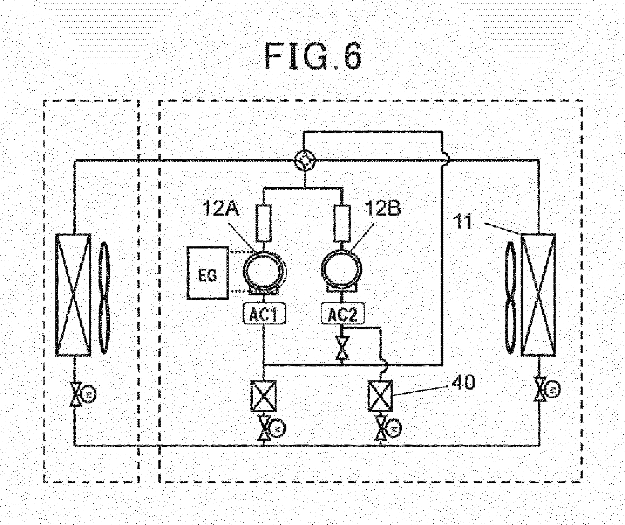

FIG. 6 is an apparatus configuration diagram of Japanese Patent Laid-Open No. 2003-56932, and a compressor 12A and a compressor 12B are connected in parallel in a refrigerating cycle. In Japanese Patent Laid-Open No. 2003-56932, the compressor 12A with a large capacity is driven by a gas engine EG, the compressor 12B with a small capacity is driven by an electric motor M, the compressor 12B with a small capacity is driven by the electric motor M when a load required of the compressor is small, the compressor 12A with a large capacity is driven by the gas engine EG when a required load is about medium, and when a required load is large, the two large and small compressors are simultaneously driven by the respective driving means. In the air conditioning apparatus that drives one compressor by one gas engine, the engine is selected and adjusted so as to be able to perform a highly efficient operation in response to a medium load which is required with a high frequency, so that when a small load is required and when a large load is required, the engine has to be operated at an engine speed outside of an engine speed region where a highly efficient operation can be performed. In the technique disclosed in Japanese Patent Laid-Open No. 2003-56932, in the case of the load required at a heating operation time being a high load, a refrigerant that absorbs heat from outside air in an outdoor heat exchanger 11 is sucked by the compressor 12A which is driven by the gas engine EG via an accumulator AC1, and a medium-temperature and medium-pressure refrigerant that absorbs heat from gas engine exhaust heat by an exhaust heat recovering heat exchanger 40 is sucked by the electric motor drive compressor 12B via an accumulator AC2. In this configuration, a more efficient operation is enabled by using the exhaust heat of the internal combustion engine which is adopted as the driving means of the compressor with a large capacity, in heating the refrigerant which is sucked by the compressor with a small capacity.

### SUMMARY OF THE INVENTION

The above described conventional air conditioning apparatus has a configuration in which in each of suction pipes of the two compressors which are connected in parallel, a bypass pipe in which the refrigerant that absorbs heat from the gas engine exhaust heat is caused to flow and an exhaust heat using heat exchanger are installed.

When a compressor sucks an unvaporized liquid refrigerant, an interior of the compressor is generally under an abnormally high pressure, which results in a failure of the compressor, and reliability is greatly impaired, so that in the above described conventional air conditioning apparatus, an accumulator is installed in each of the suction pipes of the compressors connected in parallel, and one end of the bypass pipe is connected to an upstream side of the accumulator, whereby even when both the refrigerant passing through the outdoor heat exchanger, and the refrigerant passing through the exhaust heat using heat exchanger are in an unvaporized state, the accumulators temporarily store the liquid refrigerant, so that the compressors are configured to hardly suck the liquid refrigerant, and reliability is secured.

However, the above described conventional air conditioning apparatus using the compressor having the gas engine as the driving source has a large capability and is often used in an office building or a large store. In an office building or a large store like this, a plurality of indoor units are used, and the indoor units and an outdoor unit are connected by a refrigerant pipe, so that a pipe length becomes long. Accordingly, in the large air conditioning apparatus like this, the amount of refrigerant which is used increases, and it is not uncommon for the amount to reach tens of kilograms. The accumulator for temporarily storing the liquid refrigerant and increasing reliability of the compressor is designed by assuming the amount of refrigerant to be used, and therefore increases in size, and an internal capacity reaches several tens litters. Document EP-A-2 908 061 discloses an air conditioning apparatus according to the preamble of claim 1.

In the above described conventional air conditioning apparatus, the two accumulators are required, because the exhaust heat of the internal combustion engine which is adopted as the driving means of the compressor with a large capacity is used in heating of the refrigerant via a structure that uses the compressor with a small capacity as a gas pump at the heating operation time, that is, the pressure of the refrigerant which is sucked by the compressor with a large capacity, and the pressure of the refrigerant which is sucked by the compressor with a small capacity are different, and therefore the above described conventional air conditioning apparatus has the problem of the apparatus increasing in size.

The present invention is to solve the aforementioned conventional problem, and has an object to provide an air conditioning apparatus that makes the number of accumulators for securing reliability of compressors only one, that is, achieves reduction in size of the apparatus.

In order to solve the above described conventional problem, an air conditioning apparatus of the present invention as defined in claim 1 is an air conditioning apparatus that performs air conditioning by circulating a refrigerant, the air conditioning apparatus including, inter alia, a first compressor having a gas engine as a driving source and a second compressor having an electric motor as a driving source, the first compressor and the second compressor being connected in parallel, the air conditioning apparatus including an accumulator upstream of a low pressure pipe branching section that branches a low pressure pipe to a first suction pipe that is provided at a suction side of the first compressor, and a second suction pipe that is provided at a suction side of the second compressor.

### Advantageous Effect of Invention

In the air conditioning apparatus of the present invention can make the number of accumulators for securing reliability of the compressors only one, so that the air conditioning apparatus that achieves reduction in size of the apparatus can be provided.

### BRIEF DESCRIPTION OF THE DRAWINGS

FIG. 1 is a diagram illustrating a configuration of embodiment 1 of the present invention;
FIG. 2 is a diagram illustrating a configuration of embodiment 2 of the present invention;
FIG. 3 is a diagram illustrating a configuration of embodiment 3 of the present invention;
FIG. 4 illustrates an optimal operation ratio based on magnitudes of loads of a gas engine drive compressor and an electric motor drive compressor in an air conditioning apparatus in each of embodiments 1 and 2 of the present invention;
FIG. 5 is a Molier chart illustrating refrigerating cycle operating points in embodiments 1 and 2 of the present invention; and
FIG. 6 is a configuration diagram of an air conditioning apparatus in Japanese Patent Laid-Open No. 2003-56932.

### DETAILED DESCRIPTION OF THE PREFERRED EMBODIMENTS

According to the present invention as defined in claim 1, an air conditioning apparatus that performs air conditioning by circulating a refrigerant, the air conditioning apparatus including a first compressor having a gas engine as a driving source and a second compressor having an electric motor as a driving source, the first compressor and the second compressor being connected in parallel, the air conditioning apparatus including an accumulator upstream of a low pressure pipe branching section that branches a low pressure pipe to a first suction pipe that is provided at a suction side of the first compressor, and a second suction pipe that is provided at a suction side of the second compressor.

The air conditioning apparatus further includes a first bypass pipe having one end connected to a liquid pipe, and the other end connected to the second suction pipe, decompressing means and an exhaust heat recovering heat exchanger that are provided in the first bypass pipe sequentially from a side of the liquid pipe, inflow preventing means that is provided in the second suction pipe, and is located upstream of a connection section of the first bypass pipe and the second suction pipe, a second bypass pipe having one end connected to the first bypass pipe at a downstream portion from the exhaust heat recovering heat exchanger, and the other end connected to the low pressure pipe at an upstream portion from the accumulator, and a first valve provided in the second bypass pipe.

The number of accumulators for securing reliability of the compressors can be made only one, so that the air conditioning apparatus that achieves reduction in size of the apparatus can be provided.

According to the above described configuration, at the heating operation time, the refrigerant which vaporizes in the outdoor heat exchanger, and the refrigerant that vaporizes in the exhaust heat recovering heat exchanger do not join each other, and are sucked by the separate compressors. The heat absorption sources of the air heat exchanger and the exhaust heat recovering heat exchanger are air (outside air) and engine exhaust heat cooling water respectively, and the temperature of the engine cooling water is a high temperature with respect to the outside air temperature, so that the vaporization pressure of the refrigerant in the exhaust heat recovering heat exchanger becomes high, with respect to the vaporization pressure of the refrigerant in the air heat exchanger.

Further, the accumulator is installed in the low pressure pipe which is located upstream of the low pressure pipe branching section that branches the low pressure pipe to the first suction pipe and the second suction pipe, and the first valve is provided in the second bypass pipe, so that when the outlet refrigerant of the exhaust heat recovering heat exchanger is unvaporized (no degree of superheat), the liquid refrigerant flows to an air heat exchanger side where the vaporization pressure is low, that is, the low pressure pipe, from the exhaust heat recovering heat exchanger where the vaporization pressure is high by the first valve, and is stored in the accumulator provided in the low pressure pipe, and vaporization is promoted by pressure reduction.

Consequently, in the air conditioning apparatus of the present invention, it becomes possible to set the pressures of the refrigerant which vaporizes in the outdoor heat exchanger and the refrigerant which vaporizes in the exhaust heat recovering heat exchanger properly in accordance with the temperatures of the respective heat absorption sources, and the pressure of the refrigerant which vaporizes in the exhaust heat recovering heat exchanger can be set to be higher than the pressure of the refrigerant which vaporizes in the air heat exchanger, so that power of the compressor which sucks the refrigerant which is vaporized in the exhaust heat recovering heat exchanger can be reduced. Further, even when the refrigerant which passes through the exhaust heat recovering heat exchanger is an unvaporized liquid refrigerant, the liquid refrigerant is detoured to the low pressure pipe, so that the compressor which compresses the refrigerant passing through the exhaust heat recovering heat exchanger can be restrained from sucking a liquid refrigerant.

The exhaust heat of the gas engine which is adopted as the driving means of the first compressor is used in heating the refrigerant which is sucked by the compressor of the second compressor having the electric motor as the driving source, so that it becomes possible to make the number of accumulators only one while achieving high efficiency at the heating time. That is, the air conditioning apparatus that achieves reduction in size of the apparatus while realizing a highly efficient heating operation can be provided.

The air conditioning apparatus further includes detecting means that detects a degree of superheat of a refrigerant, at an outlet of the exhaust heat recovering heat exchanger, wherein control means that controls the first valve based on information on the degree of superheat of the refrigerant detected by the detecting means is provided.

The detecting means which detects the degree of superheat of the outlet refrigerant of the exhaust heat recovering heat exchanger, and the control means which controls opening and closing of the first valve in accordance with information on the degree of superheat detected by the detecting means are provided, so that even when the outlet refrigerant of the exhaust heat recovering heat exchanger is unvaporized (has no degree of superheat), the liquid refrigerant is stored in the accumulator which is provided in the low pressure pipe by the control means opening the first valve, and vaporization is promoted by pressure reduction. Since the second compressor does not suck the liquid refrigerant, it becomes possible to make the number of accumulators only one while achieving high efficiency at the heating time. That is, the air conditioning apparatus which achieves reduction in size of the apparatus while realizing a highly efficient heating operation can be provided.

According to a further aspect of the present invention, the first bypass pipe includes a second valve between a connection section of the first bypass pipe and the second bypass pipe and the connection section of the first bypass pipe and the second suction pipe, and the control means controls opening and closing of the second valve, based on the information on the degree of superheat of the refrigerant which is detected by the detecting means, and operation information of the first compressor and the second compressor.

Especially when an air conditioning capability supplied by the second compressor is large with respect to an air conditioning capability supplied by the first compressor, that is, when a refrigerant circulation amount in the second compressor is large with respect to a refrigerant circulation amount in the first compressor, if the first valve is opened, a liquid refrigerant flows to an air heat exchanger side where the vaporization pressure is low, that is, the low pressure pipe, from the exhaust heat recovering heat exchanger where the vaporization pressure is high, similarly to the operation in the third aspect of the present invention, but after the pressures are balanced, if the circulation amount of the second compressor is large with respect to the first compressor, a suction side pressure of the second compressor becomes low with respect to a suction pressure of the first compressor, and there can arise the second compressor sucking the liquid refrigerant. The control means controls the second valve based on the information on the degree of superheat of the outlet refrigerant of the exhaust heat recovering heat exchanger, and the operation information of the first compressor and the second compressor, so that in the case described above, the control means closes the second valve, and thereby the second compressor does not suck a liquid refrigerant, that is, it becomes possible to make the number of accumulators only one.

Hereinafter, embodiments of the present invention will be described with reference to the drawings. Note that the present invention is not limited by the embodiments.

### (Embodiment 1)

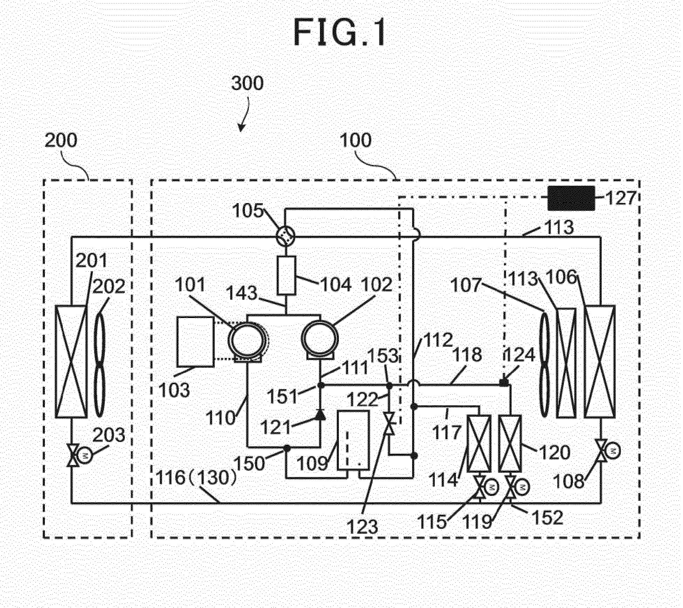

FIG. 1 illustrates a configuration of an air conditioning apparatus 300 in Embodiment 1 of the present invention.

The air conditioning apparatus 300 according to the present embodiment includes an outdoor unit 100 and an indoor unit 200. Note that in FIG. 1, only one indoor unit 200 is installed, but a plurality of indoor units may be installed in parallel, with respect to the outdoor unit 100.

The outdoor unit 100 includes a gas engine 103 with gas as a driving source, a first compressor 101 that obtains a driving force from the gas engine 103 to compress a refrigerant, and a second compressor 102 with an electric motor as the driving source. As the first compressor 101, a compressor having a larger capacity than the second compressor 102 is selected.

A junction discharge pipe 143 where a discharge pipe of the first compressor 101 and a discharge pipe of the second compressor 102 join each other is equipped with an oil separator 104. The oil separator 104 separates oil contained in discharge refrigerant gas of the first compressor 101 and the second compressor 102.

The oil separated in the oil separator 104 is returned to a first suction pipe 110 that is provided at a suction side of the first compressor and a second suction pipe 111 that is provided at a suction side of the second compressor, through an oil return pipe not illustrated.

A four-way valve 105 is located downstream of the oil separator 104. The four-way valve 105 is to switch a refrigerating cycle between cooling and heating. Note that in FIG. 1, a heating operation is achieved when the refrigerant is passed along a solid line, and a cooling operation is achieved when the refrigerant is passed along a dotted line.

The junction discharge pipe 143 is connected to one end of an indoor heat exchanger 201 in the indoor unit 200. The indoor unit 200 includes the indoor heat exchanger 201, an indoor blower fan 202 and an indoor equipment decompression device 203.

A refrigerant pipe 130 that is connected to the other end of the indoor heat exchanger 201 is connected to one end of an outdoor heat exchanger 106 in the outdoor unit 100 via the indoor equipment decompression device 203 and an outdoor decompression device 108.

In the refrigerant pipe 130, the pipe between the indoor equipment decompression device 203 and the outdoor decompression device 108 is defined as a liquid pipe 116.

A radiator 113 is provided at a leeward side of the outdoor heat exchanger 106, and heat radiation of engine cooling water is performed by an outdoor fan 107.

A refrigerant pipe 133 is connected to the other end of the outdoor heat exchanger 106. The refrigerant pipe 133 is connected to a low pressure pipe 112 via the four-way valve 105. The low pressure pipe 112 is equipped with an accumulator 109. The low pressure pipe 112 branches into the first suction pipe 110 and the second suction pipe 111 in a low pressure pipe branching section 150 that is downstream of the accumulator 109.

Here, the low pressure pipe 112 is from the four-way valve 105 to the low pressure pipe branching section 150.

The air conditioning apparatus 300 includes a first bypass pipe 118 having one end connected to the liquid pipe 116, and the other end connected to a second suction pipe 111.

The first bypass pipe 118 includes an exhaust heat recovering decompression device (decompressing means) 119 and an exhaust heat recovering heat exchanger 120 sequentially from a liquid pipe 116 side. The exhaust heat recovering heat exchanger 120 moves exhaust heat of the gas engine 103 to the refrigerant. Since the exhaust heat recovering decompression device 119 and the exhaust heat recovering heat exchanger 120 are provided, the refrigerant which flows in the air conditioning apparatus 300 also can absorb heat from the engine cooling water at a heating time.

The second suction pipe 111 is equipped with a check valve (inflow preventing means) 121 upstream of a connection section 151 of the second suction pipe 111 and the first bypass pipe 118.

The check valve 121 as the inflow preventing means is not necessarily limited to a check valve. For example, any valve that can prevent a medium pressure refrigerant which flows into the second suction pipe 111 from flowing into the first suction pipe 110 where a low pressure refrigerant flows, such as an on-off valve, can be adopted.

A second bypass pipe 122 is connected to the first bypass pipe 118. The second bypass pipe 122 has one end connected to the first bypass pipe 118 at a downstream portion from the exhaust heat recovering heat exchanger 120, and the other end connected to the low pressure pipe 112 at an upstream portion from the accumulator 109.

The second bypass pipe 122 is equipped with a first on-off valve (first valve) 123.

The first on-off valve 123 as a valve can be any valve that can pass a liquid refrigerant to an air heat exchanger side where vaporization pressure is low, that is, the low pressure pipe 112, from the exhaust heat recovering heat exchanger 120 where vaporization pressure is high, by the first valve, when an outlet refrigerant of the exhaust heat recovering heat exchanger 120 is unvaporized (has no degree of superheat). For example, an expansion valve may be adopted.

A third bypass pipe 117 is connected to the liquid pipe 116, upstream of a connection section 152 of the liquid pipe 116 and the first bypass pipe 118, with a flow of the refrigerant at the heating time as a reference. The third bypass pipe 117 has one end connected to the liquid pipe 116, and the other end connected to the low pressure pipe 112.

A connection spot of the third bypass pipe 117 and the low pressure pipe 112 can be upstream of the accumulator 109.

The third bypass pipe 117 includes a second exhaust heat recovering decompression device 115 and a second exhaust heat recovering heat exchanger 114 in sequence from the liquid pipe 116 side.

Detecting means 124 that detects the degree of superheat of the refrigerant is provided at an outlet of the exhaust heat recovering heat exchanger 120.

Further, the air conditioning apparatus 300 includes control means 127.

The control means 127 can be realized by using one or a plurality of microcomputers. In that case, the microcomputer can have a configuration including, for example, a CPU, a ROM and a flash memory, and a RAM, and the CPU executes a computer program stored in the ROM while using the RAM as a working region, and collectively controls the respective sections of the air conditioning apparatus 300.

The control means 127 controls opening and closing of the first on-off valve 123 (or an opening degree of an expansion valve in a case of using the expansion valve), based on information on the degree of superheat of the refrigerant which is detected by the detecting means 124. The control means 127 controls the first on-off valve 123 to open when an outlet refrigerant of the exhaust heat recovering heat exchanger 120 is unvaporized (has no degree of superheat).

Note that the detecting means 124 is composed of a temperature sensor and a pressure sensor not illustrated, and detects the degree of superheat of the refrigerant by calculating means that is not illustrated and is provided in the control means 127 by detecting a temperature and a pressure of the refrigerant in the first bypass pipe 118 in an outlet of the exhaust heat recovering heat exchanger 120.

Next, operations of the outdoor unit 100 and the indoor unit 200 will be described separately in accordance with magnitudes of loads which are required, in the cooling operation, the heating operation and the respective operation states, with use of FIG. 1.

### (Cooling operation low load time)

At a low load time in the cooling operation, only the second compressor 102 with the electric motor as the driving source is driven. The second exhaust heat recovering decompression device 115 and the exhaust heat recovering decompression device 119 are closed. The four-way valve 105 is set to pass the refrigerant along a dotted line.

The high-temperature and high-pressure refrigerant which is compressed by the second compressor 102 flows into the oil separator 104. A gas refrigerant with high purity from which oil is separated in the oil separator 104 passes through the four-way valve 105 and enters the outdoor heat exchanger 106. The gas refrigerant exchanges heat with outside air, radiates heat, condenses thereafter in the outdoor heat exchanger 106, and becomes a high-pressure liquid refrigerant to pass through the outdoor decompression device 108 to be supplied to the indoor unit 200.

The high-pressure liquid refrigerant that enters the indoor unit 200 is decompressed in the indoor equipment decompression device 203 to be in a gas-liquid two-phase state, and flows into the indoor heat exchanger 201. The refrigerant in the gas-liquid two-phase state exchanges heat with air in a space which is an air conditioning target to absorb heat and vaporize thereafter in the indoor heat exchanger 201, and becomes a gas refrigerant to flow out of the indoor unit 200.

The gas refrigerant which flows out of the indoor unit 200 returns to the outdoor unit 100 again. The gas refrigerant that flows into the outdoor unit 100 passes through the four-way valve 105 and the accumulator 109 to return to the second compressor 102, and repeats the above described process.

### (Cooling operation medium load time)

At a medium load time in the cooling operation, the first compressor 101 having the gas engine 103 as the driving source is driven. The second exhaust heat recovering decompression device 115 and the exhaust heat recovering decompression device 119 are closed. The four-way valve 105 is set to pass the refrigerant along the dotted line.

The high-temperature and high-pressure refrigerant which is compressed by the first compressor 101 flows into the oil separator 104. The gas refrigerant with high purity from which oil is separated in the oil separator 104 passes through the four-way valve 105 and enters the outdoor heat exchanger 106. The gas refrigerant exchanges heat with outside air, radiates heat, condenses thereafter in the outdoor heat exchanger 106, and becomes a high-pressure liquid refrigerant to pass through the outdoor decompression device 108 to be supplied to the indoor unit 200.

The high-pressure liquid refrigerant that enters in the indoor unit 200 is decompressed in the indoor equipment decompression device 203 to be in a gas-liquid two-phase state, and flows into the indoor heat exchanger 201. The refrigerant in the gas-liquid two-phase state exchanges heat with air in a space which is an air conditioning target to absorb heat and vaporize thereafter in the indoor heat exchanger 201, and becomes a gas refrigerant to flow out of the indoor unit 200.

The gas refrigerant which flows out of the indoor unit 200 returns to the outdoor unit 100 again. The gas refrigerant that flows into the outdoor unit 100 passes through the four-way valve 105 and the accumulator 109 to return to the first compressor 101, and repeats the above described process.

Note that exhaust heat which is generated by the gas engine 103 is carried to the radiator 113 by engine cooling water and a pump not illustrated, exchanges heat with outside air, and returns to the gas engine 103 again.

### (Cooling operation high load time)

At a high load time in the cooling operation, both of the first compressor 101 having the gas engine 103 as the driving source, and the second compressor 102 having the electric motor as the driving source are driven. The second exhaust heat recovering decompression device 115 and the exhaust heat recovering decompression device 119 are closed. The four-way valve 105 is set to pass the refrigerant along the dotted line.

The high-temperature and high-pressure refrigerant which is compressed by the first compressor 101 and the second compressor 102 flows into the oil separator 104. The refrigerant which flows into the oil separator 104 becomes a gas refrigerant with high purity from which oil is separated, passes through the four-way valve 105 and enters the outdoor heat exchanger 106. The gas refrigerant exchanges heat with outside air, radiates heat, condenses thereafter in the outdoor heat exchanger 106, and becomes a high-pressure liquid refrigerant to pass through the outdoor decompression device 108 to be supplied to the indoor unit 200.

The high-pressure liquid refrigerant that enters the indoor unit 200 is decompressed in the indoor equipment decompression device 203 to be in a gas-liquid two-phase state, and flows into the indoor heat exchanger 201. The refrigerant in the gas-liquid two-phase state exchanges heat with air in a space which is an air conditioning target to absorb heat and vaporize thereafter in the indoor heat exchanger 201, and becomes a gas refrigerant to flow out of the indoor unit 200.

The gas refrigerant which flows out of the indoor unit 200 returns to the outdoor unit 100 again. The gas refrigerant that flows into the outdoor unit 100 passes through the four-way valve 105 and the accumulator 109, is branched thereafter to return to the first compressor 101 through the first suction pipe 110, and to the second compressor 102 through the second suction pipe 111, and repeats the above described process.

Note that exhaust heat which is generated by the gas engine 103 is carried to the radiator 113 by the engine cooling water and the pump not illustrated, exchanges heat with outside air and returns to the gas engine 103 again.

### (Heating operation low load time)

At a low load time in the heating operation, only the second compressor 102 having the electric motor as the driving source is driven. The second exhaust heat recovering decompression device 115 and the exhaust heat recovering decompression device 119 are closed. The outdoor decompression device 108 is opened. The four-way valve 105 is set to pass the refrigerant along the solid line.

The high-temperature and high-pressure gas refrigerant which is compressed by the second compressor 102 flows into the oil separator 104. A gas refrigerant with high purity from which oil is separated in the oil separator 104 passes through the four-way valve 105 and is supplied to the indoor unit 200.

The high-temperature and high-pressure gas refrigerant which enters the indoor unit 200 flows into the indoor heat exchanger 201, exchanges heat with air in a space which is an air conditioning target to radiate heat, condenses thereafter, and becomes a liquid refrigerant to flow out of the indoor unit 200 through the indoor equipment decompression device 203.

The liquid refrigerant which flows out of the indoor unit 200 returns to the outdoor unit 100 again. The liquid refrigerant which flows into the outdoor unit 100 is decompressed in the outdoor decompression device 108 to be in a gas-liquid two-phase state and flows into the outdoor heat exchanger 106. The refrigerant in the gas-liquid two-phase state exchanges heat with outside air to absorb heat and vaporize thereafter in the outdoor heat exchanger 106 to become a gas refrigerant to pass through the four-way valve 105 and the accumulator 109 to return to the second compressor 102, and repeats the above described process.

### (Heating operation medium load time)

At a medium load time in the heating operation, the first compressor 101 having the gas engine 103 as the driving source is driven. The second exhaust heat recovering decompression device 115 and the exhaust heat recovering decompression device 119 are closed. The outdoor decompression device 108 is opened. The four-way valve 105 is set to pass the refrigerant along the solid line.

The high-temperature and high-pressure refrigerant which is compressed by the first compressor 101 flows into the oil separator 104. A gas refrigerant with high purity from which oil is separated in the oil separator 104 is supplied to the indoor unit 200 through the four-way valve 105.

The high-temperature and high-pressure gas refrigerant which enters the indoor unit 200 flows into the indoor heat exchanger 201, exchanges heat with air in a space which is an air conditioning target to radiate heat and condense thereafter, and becomes a liquid refrigerant to flow out of the indoor unit 200 through the indoor equipment decompression device 203.

The liquid refrigerant which flows out of the indoor unit 200 returns to the outdoor unit 100 again. The liquid refrigerant which flows into the outdoor unit 100 is decompressed in the outdoor decompression device 108 to be in a gas-liquid two-phase state and flows into the outdoor heat exchanger 106. The refrigerant in the gas-liquid two-phase state exchanges heat with outside air to absorb heat and vaporize thereafter, and becomes a gas refrigerant. Thereafter, the gas refrigerant passes through the four-way valve 105 and the accumulator 109, returns to the first compressor 101, and repeats the above described process.

### (Heating operation extremely low temperature time)

At an extremely lower temperature time in the heating operation, the first compressor 101 with the gas engine 103 as the driving source, and the second compressor 102 with the electric motor as the driving source are driven. The second exhaust heat recovering decompression device 115 is opened, and the exhaust heat recovering decompression device 119 is closed. The outdoor decompression device 108 is closed. The four-way valve 105 is set to pass the refrigerant along the solid line.

The high-temperature and high-pressure refrigerant which is compressed by the first compressor 101 and the second compressor 102 flows into the oil separator 104. A gas refrigerant with high purity from which oil is separated in the oil separator 104 is supplied to the indoor unit 200 through the four-way valve 105.

The high-temperature and high-pressure gas refrigerant which enters the indoor unit 200 flows into the indoor heat exchanger 201, exchanges heat with air in a space which is an air conditioning target to radiate heat and condense thereafter, and becomes a liquid refrigerant to flow out of the indoor unit 200 through the indoor equipment decompression device 203.

The liquid refrigerant which flows out of the indoor unit 200 returns to the outdoor unit 100 again. The liquid refrigerant which flows into the outdoor unit 100 is decompressed in the second exhaust heat recovering decompression device 115 to be in a gas-liquid two-phase state and flows into the second exhaust heat recovering heat exchanger 114. The refrigerant in the gas-liquid two-phase state exchanges heat with engine cooling water to absorb heat and vaporize thereafter, and becomes a medium-temperature and medium-pressure gas refrigerant. Thereafter, the gas refrigerant passes through the accumulator 109, is branched to return to the first compressor 101 through the first suction pipe 110, and return to the second compressor 102 through the second suction pipe 111, and repeats the above described process.

At this time, the outdoor decompression device 108 is closed, so that the refrigerant does not flow into the outdoor heat exchanger 106. This is to prevent frost from forming on the outdoor heat exchanger 106 because an outside air temperature is low.

### (Heating operation high load)

At a high load time in the heating operation, the first compressor 101 with the gas engine 103 as the driving source, and the second compressor 102 with the electric motor as the driving source are driven. The second exhaust heat recovering decompression device 115 is closed, and the exhaust heat recovering decompression device 119 is opened. The outdoor decompression device 108 is opened. The four-way valve 105 is set to pass the refrigerant along the solid line.

The high-temperature and high-pressure refrigerant which is compressed by the first compressor 101 and the second compressor 102 flows into the oil separator 104. The refrigerant which flows into the oil separator 104 becomes a gas refrigerant with high purity from which oil is separated, passes through the four-way valve 105, and is supplied to the indoor unit 200.

The high-temperature and high-pressure gas refrigerant which enters the indoor unit 200 flows into the indoor heat exchanger 201, exchanges heat with air in a space which is an air conditioning target to radiate heat and condense thereafter, and becomes a liquid refrigerant to flow out of the indoor unit 200 through the indoor equipment decompression device 203.

The liquid refrigerant which flows out of the indoor unit 200 returns to the outdoor unit 100 again. The liquid refrigerant which flows into the outdoor unit 100 partially flows into the first bypass pipe 118. The remaining liquid refrigerant which does not flow into the first bypass pipe 118 is decompressed in the outdoor decompression device 108 to be in a gas-liquid two-phase state and flows into the outdoor heat exchanger 106. The refrigerant in the gas-liquid two-phase state exchanges heat with outside air to absorb heat and vaporize thereafter, and becomes a low-temperature and low-pressure gas refrigerant. Thereafter, the gas refrigerant passes through the four-way valve 105, the accumulator 109 and the first suction pipe 110, and returns to the first compressor 101.

The liquid refrigerant which flows into the first bypass pipe 118 is decompressed in the exhaust heat recovering decompression device 119, is in the gas-liquid two-phase state and flows into the exhaust heat recovering heat exchanger 120. The refrigerant in the gas-liquid two-phase state which flows into the exhaust heat recovering heat exchanger 120 absorbs heat from the engine cooling water not illustrated, vaporizes thereafter, and becomes a medium-temperature and medium-pressure gas refrigerant. The medium-temperature and medium-pressure gas refrigerant passes through the first bypass pipe 118 and returns to the second compressor 102. Here, the second suction pipe 111 is provided with the check valve 121, so that the medium-temperature and medium-pressure gas refrigerant is not sucked by the first compressor 101.

Accordingly, the low-temperature and low-pressure gas refrigerant which is vaporized in the outdoor heat exchanger 106 returns to the first compressor 101, and is compressed to be a high-temperature and high-pressure gas refrigerant, whereas the medium-temperature and medium-pressure gas refrigerant which is vaporized in the exhaust heat recovering heat exchanger 120 returns to the second compressor 102, and is compressed into the high-temperature and high-pressure gas refrigerant, and the above described process is repeated.

At this time, the degree of superheat of the outlet refrigerant of the exhaust heat recovering heat exchanger 120 is always monitored by the detecting means 124 and the control means 127. This is to avoid the second compressor 102 from sucking the liquid refrigerant and going out of order, because the refrigerant which passes through the exhaust heat recovering heat exchanger 120 passes through the first bypass pipe 118 and is directly sucked by the second compressor 102.

It is likely to occur at an actuation time of the air conditioning apparatus, and in a case of the driving means of the compressor changing as described above by a variation in a required air conditioning load that the detecting means 124 detects that the degree of superheat of the outlet refrigerant of the exhaust heat recovering heat exchanger 120 is zero, that is, the unvaporized liquid refrigerant is present.

An operation in the case of the detecting means 124 detecting that the degree of superheat of the outlet refrigerant of the exhaust heat recovering heat exchanger 120 is zero, that is, the unvaporized liquid refrigerant is present is performed as follows.

When the control means 127 determines that the degree of superheat of the refrigerant at the outlet of the exhaust heat recovering heat exchanger 120 is zero, that is, the unvaporized liquid refrigerant is present, based on the temperature and pressure information of the refrigerant which is sent from the detecting means 124, the control means 127 opens the first on-off valve 123 which is provided in the second bypass pipe 122. When the first on-off valve 123 is opened, the refrigerant in the first bypass pipe 118 is not sucked by the second compressor 102, flows into the low pressure pipe 112 through the second bypass pipe 122 and is hastened to be vaporized by pressure reduction, because the refrigerant in the first bypass pipe 118 to which one end of the second bypass pipe 122 is connected has a medium pressure, and the refrigerant in the low pressure pipe 112 to which the other one end is connected has a low pressure. The refrigerant which is not completely vaporized even when the refrigerant is hastened to be vaporized is temporarily stored in the accumulator 109 which is provided in the low pressure pipe, and the first compressor 101 does not suck the liquid refrigerant. When the control means 127 opens the first on-off valve 123, and it is detected that the degree of superheat of the refrigerant which is detected by the detecting means 124 is zero or more, that is, the unvaporized liquid refrigerant is absent, the control means 127 closes the first on-off valve 123 again, and continues the operation at the heating high load time.

The operations at the heating extremely low temperature time and at the heating high load time are divided in accordance with the outside air temperature. For example, in a case where the outside air temperature is below 0° degrees, there is a high possibility of front forming on the outdoor heat exchanger 106, so that an operation pattern at the heating extremely low temperature time is selected, and frost formation is avoided by performing heat absorption from only the second exhaust heat recovering heat exchanger 114 without performing heat absorption in the outdoor heat exchanger 106. When the outside air temperature is 0°C or higher, an operation pattern at the heating high load time is selected, and heat absorption in the outdoor heat exchanger 106 and heat absorption in the exhaust heat recovering heat exchanger 120 are used in combination.

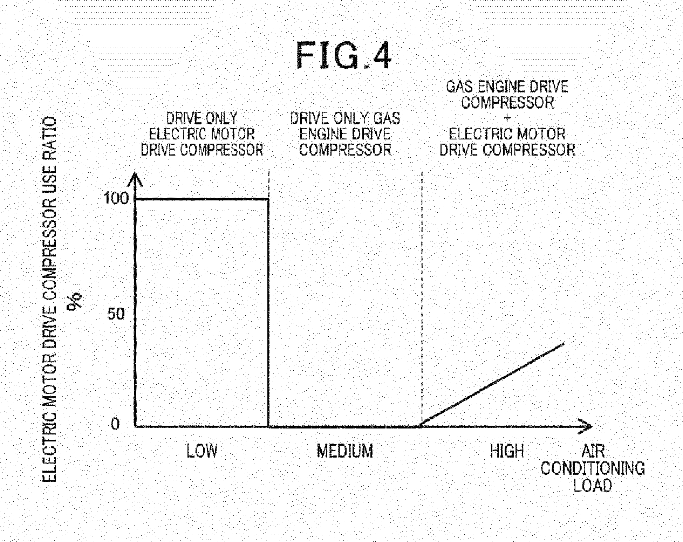

As illustrated in FIG. 4, it is found that in the above described air conditioning apparatus, only the second compressor 102 which is driven by the electric motor is driven when the air conditioning load is small, only the first compressor 101 which is driven by the gas engine is driven when the air conditioning load is about medium, and when the air conditioning load is high, the first compressor 101 which is driven by the gas engine is driven at a maximum output, and an insufficient amount is made up for by the second compressor 102 which is driven by the electric motor, whereby highest energy efficiency is obtained, from the test calculation result, and the actual machine evaluation result by the inventors.

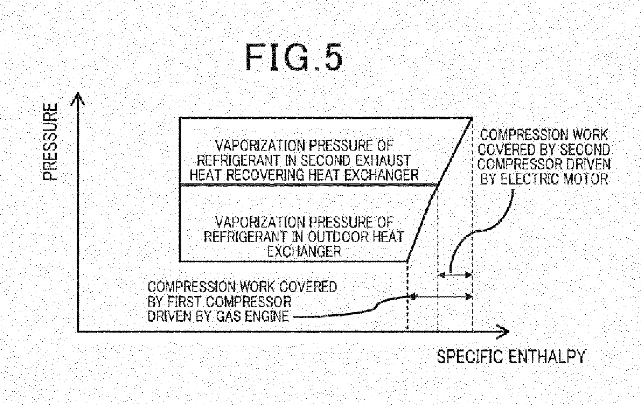

In the air conditioning apparatus of the present invention, in the case of the air conditioning load being high in the heating operation, a low-temperature and low-pressure gas refrigerant that absorbs heat from air (outside air) is compressed to a high temperature and a high pressure by the first compressor 101 which is driven by the gas engine, and a medium-temperature and medium-pressure gas refrigerant that absorbs heat from gas engine exhaust heat is compressed to a high temperature and a high pressure by the second compressor 102 which is driven by the electric motor. Consequently, as illustrated in a Molier chart of the present embodiment in FIG. 5, a suction pressure of the second compressor 102 which is driven by the electric motor is higher than a suction pressure of the first compressor 101 which is driven by the gas engine 103, and a compression ratio (high pressure/low pressure) of the second compressor 102 which is driven by the electric motor becomes low, so that energy that is consumed by the second compressor 102 which is driven by the electric motor can be decreased.

As described above, the air conditioning apparatus 300 in the present embodiment includes the accumulator 109 upstream of the low pressure pipe branching section 150 that branches the low pressure pipe 112 into the first suction pipe 110 and the second suction pipe 111.

According to the above, the number of accumulators 109 for securing reliability of the compressors can be made only one, so that the air conditioning apparatus 300 which achieves reduction in size of the outdoor unit 100 can be provided.

Further, according to the present embodiment, the first bypass pipe 118 having one end connected to the liquid pipe 116, and the other end connected to the second suction pipe 111, the exhaust heat recovering decompression device (decompressing means) 119 and the exhaust heat recovering heat exchanger 120 which are provided in the first bypass pipe 118 sequentially from the liquid pipe 116 side, the check valve (inflow preventing means) 121 which is provided in the second suction pipe 111, and is located upstream of the connection section 151 with the first bypass pipe 118, the second bypass pipe 122 having one end connected to the first bypass pipe 118 at the downstream portion from the exhaust heat recovering heat exchanger 120, and the other end connected to the low pressure pipe 112 at the upstream portion from the accumulator 109, and the first on-off valve (first valve) 123 included in the second bypass pipe 122 are provided.

According to the above, at the heating operation time, the refrigerant which vaporizes in the outdoor heat exchanger 106, and the refrigerant that vaporizes in the exhaust heat recovering heat exchanger 120 do not join each other, and are sucked by the separate compressors. The heat absorption sources of the outdoor heat exchanger 106 and the exhaust heat recovering heat exchanger 120 are air (outside air) and the engine exhaust heat cooling water respectively, and the temperature of the engine cooling water is a high temperature with respect to the outside air temperature, so that the vaporization pressure of the refrigerant in the exhaust heat recovering heat exchanger 120 becomes high with respect to the vaporization pressure of the refrigerant in the outdoor heat exchanger 106.

Further, when the outlet refrigerant of the exhaust heat recovering heat exchanger 120 is unvaporized (has no degree of superheat), the liquid refrigerant flows to an outdoor heat exchanger 106 side where the vaporization pressure is low, that is, the low pressure pipe 112 from the exhaust heat recovering heat exchanger 120 where the vaporization pressure is high by the second bypass pipe 122, and is stored in the accumulator 109 provided in the low pressure pipe 112, and vaporization is promoted by pressure reduction.

Consequently, it becomes possible to set the pressures of the refrigerant which vaporizes in the outdoor heat exchanger 106 and the refrigerant which vaporizes in the exhaust heat recovering heat exchanger 120 properly in accordance with the temperatures of the respective heat absorption sources, and the pressure of the refrigerant which vaporizes in the exhaust heat recovering heat exchanger 120 can be set to be higher than the pressure of the refrigerant which vaporizes in the outdoor heat exchanger 106, so that power of the compressor which sucks the refrigerant which is vaporized in the exhaust heat recovering heat exchanger 120 can be reduced. Further, even when the refrigerant which passes through the exhaust heat recovering heat exchanger 120 is an unvaporized liquid refrigerant, the liquid refrigerant is detoured to the low pressure pipe 112, so that the compressor which compresses the refrigerant passing through the exhaust heat recovering heat exchanger 120 can be restrained from sucking the liquid refrigerant.

The exhaust heat of the gas engine 103 which is adopted as the driving means of the first compressor 101 is used in heating the refrigerant which is sucked by the second compressor 102 having the electric motor as the driving source, so that it becomes possible to make the number of accumulators 109 only one while achieving high efficiency at the heating time. That is, the air conditioning apparatus 300 that achieves reduction in size of the outdoor unit 100 while realizing a highly efficient heating operation can be provided.

Further, according to the present embodiment, the detecting means 124 which detects the degree of superheat of the refrigerant is further provided at the outlet of the exhaust heat recovering heat exchanger 120, and the control means 127 which controls the first on-off valve 123 based on information on the degree of superheat of the refrigerant detected by the detecting means 124 is further provided.

According to the above, even when the outlet refrigerant of the exhaust heat recovering heat exchanger 120 is unvaporized (has no degree of superheat), the liquid refrigerant is stored in the accumulator 109 which is provided in the low pressure pipe 112 by the control means 127 opening the first on-off valve 123, and vaporization is promoted by pressure reduction. Since the second compressor 102 does not suck the liquid refrigerant, it becomes possible to make the number of accumulators 109 only one while achieving high efficiency at the heating time. That is, the air conditioning apparatus 300 which achieves reduction in size of the outdoor unit 100 while realizing a highly efficient heating operation can be provided.

### (Embodiment 2)

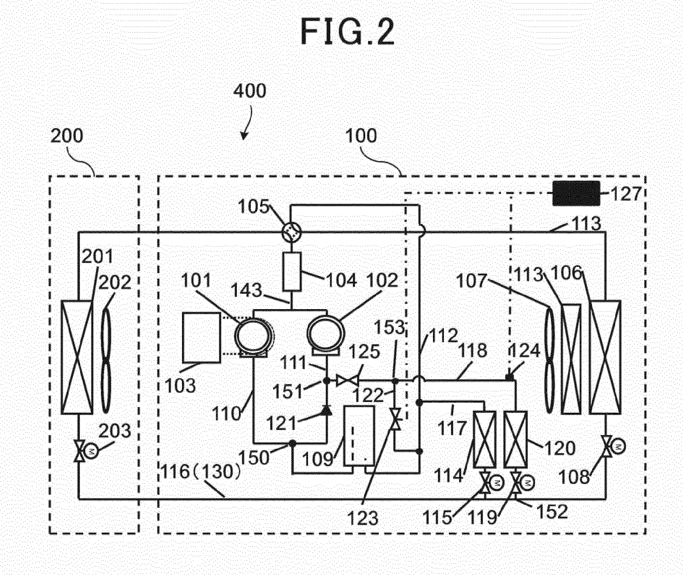

FIG. 2 illustrates a configuration of an air conditioning apparatus 400 in Embodiment 2 of the present invention. In the present embodiment, the first bypass pipe 118 includes a second on-off valve (a second valve) 125 between a connection section 153 of the first bypass pipe 118 and the second bypass pipe 122, and the connection section 151 of the first bypass pipe 118 and the second suction pipe 111. Note that in Embodiment 2, similar components to the components in Embodiment 1 are assigned with the same reference signs, and explanation of the components is omitted.

Even when the control means 127 opens the first on-off valve 123 in the operation at the heating high load time in embodiment 1, if it is not detected that the degree of superheat of the refrigerant which is detected by the detecting means 124 is zero or more, that is, an unvaporized liquid refrigerant is absent in accordance with the operation information of the first compressor 101 and the second compressor 102, the control means 127 closes the second on-off valve 125.

When an air conditioning capability covered by the second compressor 102 is large with respect to an air conditioning capability covered by the first compressor 101, that is, when a refrigerant circulation amount in the second compressor 102 is large with respect to a refrigerant circulation amount in the first compressor 101, if the first on-off valve 123 is opened, a liquid refrigerant flows into the low pressure pipe 112 where the vaporization pressure is low from the exhaust heat recovering heat exchanger 120 where the vaporization pressure is high, but after the pressures are balanced, if the circulation amount of the second compressor 102 is large with respect to that of the first compressor 101, the suction pressure of the second compressor 102 becomes low with respect to the suction pressure of the first compressor 101, and there can arises the second compressor 102 sucking the liquid refrigerant. The control means 127 controls opening and closing of the second on-off valve 125 based on the information on the degree of superheat of the outlet refrigerant of the exhaust heat recovering heat exchanger 120 by the detecting means 124, and the operation information of the first compressor 101 and the second compressor 102. Consequently, in the case described above, the control means 127 closes the second on-off valve 125, and thereby the second compressor 102 does not suck a liquid refrigerant, that is, it becomes possible to make the number of accumulators only one.

In the above explanation, the operation information of the first compressor 101 and the second compressor 102 is information (data) on the rotational frequencies of the respective compressors, and information expressing operational situations of the respective compressors such as at how many horsepower the respective compressors are working, or at what percentages the respective compressors are working.

### (Embodiment 3)

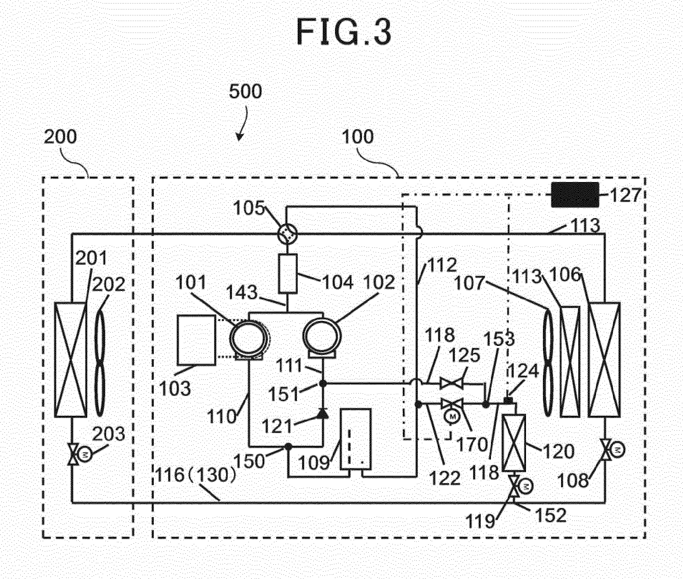

FIG. 3 illustrates a configuration of an air conditioning apparatus 500 in Embodiment 3 of the present invention. Note that in Embodiment 3, similar components to the components in Embodiment 1 are assigned with the same reference signs, and explanation of the components is omitted.

As in the present embodiment, the third bypass pipe 117, the second exhaust heat recovering decompression device 115 and the second exhaust heat recovering heat exchanger 114 do not have to be provided, unlike Embodiment 1.

In the present embodiment, a valve provided in the second bypass pipe 122 is an expansion valve 170 capable of adjusting the pressure of the refrigerant which flows in the second bypass pipe 122.

By including the expansion valve 170 as a valve, a medium pressure refrigerant that passes through the exhaust heat recovering heat exchanger 120 is made to have a low pressure by being squeezed in the expansion valve 170, and can be caused to join the low pressure pipe 112 where the low pressure refrigerant flows.

As above, the air conditioning apparatuses 300, 400 and 500 according to the respective embodiments of the present invention each uses exhaust heat of the gas engine 103 which is adopted as the driving source of the first compressor 101 in heating the refrigerant which is sucked by the compressor of the second compressor 102 having the electric motor as the driving source, so that it becomes possible to make the number of accumulators 109 only one while achieving high efficiency at the heating time. That is, the air conditioning apparatus which achieves reduction in size of the apparatus while realizing a highly efficient heating operation can be provided.

The present invention is described based on the respective embodiments thus far, but the present invention is not limited by these embodiments. The embodiments only illustrate the modes of carrying out the present invention, so that arbitrary modifications and applications can be made within the scope of the appended claims.

For example, in the present embodiment, at the heating high load time, a low-temperature and low-pressure gas refrigerant is sucked by the first compressor 101 which is driven by the gas engine 103, and a medium-temperature and medium-pressure gas refrigerant is sucked by the second compressor 102 which is driven by the electric motor respectively, but the low-temperature and low-pressure gas refrigerant may be sucked by the second compressor 102 which is driven by the electric motor, whereas the medium-temperature and medium-pressure gas refrigerant may be sucked by the first compressor 101 which is driven by the gas engine. Further, the first compressor 101 and the second compressor 102 may be both driven by the gas engine.

The air conditioning apparatus according to the present invention can be favorably used as an air conditioner capable of performing a highly efficient operation irrespective of an air conditioning load, by selecting the driving sources of the compressors in accordance with the air conditioning load.

### REFERENCE SIGNS LIST

- 101: First compressor
- 102: Second compressor
- 103: Gas engine
- 106: Outdoor heat exchanger
- 109: Accumulator
- 110: First suction pipe
- 111: Second suction pipe
- 112: Low pressure pipe
- 116: Liquid pipe
- 117: Third bypass pipe
- 118: First bypass pipe
- 119: Exhaust heat recovering decompression device (decompressing means)
- 120: Exhaust heat recovering heat exchanger
- 121: Check valve (inflow preventing means)
- 122: Second bypass pipe
- 123: First on-off valve (first valve)
- 124: Detecting means
- 125: Second on-off valve (second valve)
- 127: Control means
- 150: Low pressure pipe branching section
- 151: Connection section of second suction pipe and first bypass pipe
- 152: Connection section of liquid pipe and first bypass pipe
- 153: Connection section of first bypass pipe and second bypass pipe
- 300, 400, 500: Air conditioning apparatus

## Claims

1. An air conditioning apparatus that performs air conditioning by circulating a refrigerant, the air conditioning apparatus including a first compressor (101) having a gas engine (103) as a driving source and a second compressor (102) having an electric motor as a driving source, the first compressor (101) and the second compressor (102) being connected in parallel, and
an accumulator (109), upstream of a low pressure pipe branching section (150) that branches a low pressure pipe (112) into a first suction pipe (110) that is provided at a suction side of the first compressor (101), and a second suction pipe (111) that is provided at a suction side of the second compressor (102);
**characterized by**
a first bypass pipe (118) having one end connected to a liquid pipe (116), and the other end connected to the second suction pipe (111);
decompressing means (119) and an exhaust heat recovering heat exchanger (120) that are provided in the first bypass pipe (118) sequentially from a side of the liquid pipe (116);
inflow preventing means (121) that is provided in the second suction pipe (111), and is located upstream of a connection section (151) of the first bypass pipe (118) and the second suction pipe (111);
a second bypass pipe (122) having one end connected to the first bypass pipe (118) at a downstream portion from the exhaust heat recovering heat exchanger (120), and the other end connected to the low pressure pipe (112) at an upstream portion from the accumulator (109); and
a first valve (123) provided in the second bypass pipe (122).

2. The air conditioning apparatus according to claim 1, further comprising:
detecting means (124) that detects a degree of superheat of a refrigerant, at an outlet of the exhaust heat recovering heat exchanger (120),
wherein control means (127) that controls the first valve (123) based on information on the degree of superheat of the refrigerant detected by the detecting means (124) is provided.

3. The air conditioning apparatus according to claim 2,
wherein the first bypass pipe (118) includes a second valve (125) between a connection section (153) of the first bypass pipe (118) and the second bypass pipe (122) and the connection section (153) of the first bypass pipe (118) and the second suction pipe (111), and
the control means (127) controls opening and closing of the second valve (125), based on the information on the degree of superheat of the refrigerant which is detected by the detecting means (124), and operation information of the first compressor (101) and operation information of the second compressor (102).

## Patentansprüche

1. Klimagerät, das eine Klimatisierung durch Umwälzen eines Kältemittels durchführt, wobei das Klimagerät einen ersten Kompressor (101) mit einem Gasmotor (103) als Antriebsquelle und einen zweiten Kompressor (102) mit einem Elektromotor als Antriebsquelle aufweist, wobei der erste Kompressor (101) und der zweite Kompressor (102) parallel geschaltet sind, und
einen stromaufwärts eines Niederdruckleitung-Verzweigungsabschnitts (150) gelegenen Akkumulator (109), der eine Niederdruckleitung (112) in eine erste Saugleitung (110), die an einer Saugseite des ersten Kompressors (101) vorgesehen ist, und eine zweite Saugleitung (111), die an einer Saugseite des zweiten Kompressors (102) vorgesehen ist, verzweigt;
**gekennzeichnet durch**
eine erste Bypassleitung (118), deren eines Ende mit einer Flüssigkeitsleitung (116) verbunden ist und deren anderes Ende mit der zweiten Saugleitung (111) verbunden ist;
ein Dekompressionsmittel (119) und einen Abhitzerückgewinnungs-Wärmetauscher (120), die in der ersten Bypassleitung (118) nacheinander von einer Seite der Flüssigkeitsleitung (116) ausgehend vorgesehen sind;
ein Einströmverhinderungsmittel (121), das in der zweiten Saugleitung (111) vorgesehen ist und stromaufwärts eines Anschlussabschnitts (151) der ersten Bypassleitung (118) und der zweiten Saugleitung (111) angeordnet ist;
eine zweite Bypassleitung (122), deren eines Ende mit der ersten Bypassleitung (118) an einem von dem Abhitzerückgewinnungs-Wärmetauscher (120) stromabwärts gelegenen Abschnitt verbunden ist und deren anderes Ende mit der Niederdruckleitung (112) an einem von dem Akkumulator (109) stromaufwärts gelegenen Abschnitt verbunden ist; und
ein erstes Ventil (123), das in der zweiten Bypassleitung (122) vorgesehen ist.

2. Klimagerät nach Anspruch 1, ferner umfassend:
ein Erfassungsmittel (124), das einen Überhitzungsgrad eines Kältemittels an einem Ausgang des Abhitzerückgewinnungs-Wärmetauschers (120) erfasst,
wobei ein Steuermittel (127), das das erste Ventil (123) basierend auf Informationen über den von dem Erfassungsmittel (124) erfassten Überhitzungsgrad des Kältemittels steuert, vorgesehen ist.

3. Klimagerät nach Anspruch 2,
wobei die erste Bypassleitung (118) ein zweites Ventil (125) zwischen einem Verbindungsabschnitt (153) der ersten Bypassleitung (118) und der zweiten Bypassleitung (122) und dem Verbindungsabschnitt (153) der ersten Bypassleitung (118) und der zweiten Saugleitung (111) aufweist, und
das Steuermittel (127) das Öffnen und Schließen des zweiten Ventils (125) basierend auf den Informationen über den von dem Erfassungsmittel (124) erfassten Überhitzungsgrad des Kältemittels und auf Betriebsinformationen des ersten Kompressors (101) und Betriebsinformationen des zweiten Kompressors (102) steuert.

## Revendications

1. Climatiseur qui effectue un conditionnement d'air par circulation d'un réfrigérant, le climatiseur comprenant un premier compresseur (101) présentant un moteur à gaz (103) en tant que source d'entraînement et un deuxième compresseur (102) présentant un moteur électrique en tant que source d'entraînement, le premier compresseur (101) et le deuxième compresseur (102) étant reliés en parallèle et
un accumulateur (109), en amont d'une section de ramification de tuyau basse pression (150) qui ramifie un tuyau basse pression (112) en un premier tuyau d'aspiration (110), qui est disposé au niveau d'un côté aspiration du premier compresseur (101), et en un deuxième tuyau d'aspiration (111), qui est disposé au niveau d'un côté aspiration du deuxième compresseur (102) ;
**caractérisé par**
un premier tuyau de dérivation (118) dont une extrémité est reliée à un tuyau à liquide (116) et l'autre extrémité est reliée au deuxième tuyau d'aspiration (111) ;
des moyens de décompression (119) et un échangeur de chaleur de récupération de chaleur perdue (120) qui sont disposés dans le premier tuyau de dérivation (118) séquentiellement à partir d'un côté du tuyau à liquide (116) ;
un moyen de prévention d'un flux entrant (121) qui est disposé dans le deuxième tuyau d'aspiration (111) et qui est situé en amont d'une section de raccordement (151) du premier tuyau de dérivation (118) et du deuxième tuyau d'aspiration (111) ;
un deuxième tuyau de dérivation (122) dont une extrémité est reliée au premier tuyau de dérivation (118) au niveau d'une partie en aval de l'échangeur de chaleur de récupération de chaleur perdue (120) et l'autre extrémité est reliée au tuyau basse pression (112) au niveau d'une partie en amont de l'accumulateur (109) ; et
un premier clapet (123) disposé dans le deuxième tuyau de dérivation (122).

2. Climatiseur selon la revendication 1, comprenant en outre :
un moyen de détection (124) qui détecte un degré de surchauffe d'un réfrigérant, au niveau d'une sortie de l'échangeur de chaleur de récupération de chaleur perdue (120),
dans lequel un moyen de commande (127) qui contrôle le premier clapet (123) sur la base d'informations sur le degré de surchauffe du réfrigérant détecté par le moyen de détection (124) est prévu.

3. Climatiseur selon la revendication 2,
dans lequel le premier tuyau de dérivation (118) comprend un deuxième clapet (125) entre une section de raccordement (153) du premier tuyau de dérivation (118) et du deuxième tuyau de dérivation (122) et la section de raccordement (153) du premier tuyau de dérivation (118) et du deuxième tuyau d'aspiration (111) et
le moyen de commande (127) contrôle l'ouverture et la fermeture du deuxième clapet (125), sur la base des informations sur le degré de surchauffe du réfrigérant qui est détecté par le moyen de détection (124) et des informations de fonctionnement du premier compresseur (101) et des informations de fonctionnement du deuxième compresseur (102).
